(19) Europäisches Patentamt
European Patent Office
Office européen des brevets

(11) **EP 1 792 425 B1**

(12) **EUROPEAN PATENT SPECIFICATION**

(45) Date of publication and mention of the grant of the patent:
**24.02.2016 Bulletin 2016/08**

(51) Int Cl.:
***H04J 11/00*** *(2006.01)*     ***H04L 27/26*** *(2006.01)*

(21) Application number: **05726829.4**

(22) Date of filing: **28.02.2005**

(86) International application number:
**PCT/KR2005/000553**

(87) International publication number:
**WO 2006/033509 (30.03.2006 Gazette 2006/13)**

(54) **MB-OFDM TRANSMITTER AND RECEIVER AND SIGNAL PROCESSING METHOD THEREOF**

MB-OFDM-SENDER UND -EMPFÄNGER UND SIGNALVERARBEITUNGSVERFAHREN DAFÜR

EMETTEUR ET RECEPTEUR MB-OFDM ET PROCEDE DE TRAITEMENT DES SIGNAUX DE CELUI-CI

(84) Designated Contracting States:
**DE FI FR GB NL SE**

(30) Priority: **22.09.2004 US 948615**
**21.02.2005 KR 20050014252**

(43) Date of publication of application:
**06.06.2007 Bulletin 2007/23**

(73) Proprietors:
• **Samsung Electronics Co., Ltd.**
**Suwon-si, Gyeonggi-do, 443-742 (KR)**
• **Staccato Communications, Inc.**
**San Diego, CA 92121 (US)**

(72) Inventors:
• **LARSSON, Torbjorn**
**San Diego, CA 92121 (US)**
• **KUMAR, Nishant**
**San Diego, CA 92121 (US)**

(74) Representative: **Grünecker Patent- und Rechtsanwälte**
**PartG mbB**
**Leopoldstraße 4**
**80802 München (DE)**

(56) References cited:
**WO-A1-02/062002       KR-A- 2003 062 273**
**US-A1- 2004 081 073    US-A1- 2004 178 934**
**US-A1- 2004 190 640    US-B1- 6 622 281**
**US-B1- 6 798 826**

## Description

## Technical Field

The present invention relates to a communication system, and more particularly, to an OFDM(orthogonal frequency divisionl multiplexing) transmitting apparatus and a method thereof.

## Background Art

MB-OFDM(Multiband- Orthogonal Frequency Division Multiplexing) is particularly used in a wireless comunication system such as UWB(Ultra-WideBand) system. MB-OFDM is usually used in combination with a frequency hopping technology.

MB-OFDM is suitable for a device which is designed to satisfy the Federal Communications Commision(FCC) regulations on UWB devices. According to the current regulations, a UWB device is allowed to operate in the frequency bandwidth from 3.1 to 10.6 GHz, with the emission of power always kept under -41.3dBm/MHz within the signal bandwidth.

In a particular MB-OFDM system, coded bits are transmitted in the form of an OFDM symbol, each containing QPSK(Quadrature Phase Shift Keying) or DCM(Dual Carrier Modulation, or tone), and a pilot tone.

As a result, the resultant waveform is a frequency hopping waveform in which each OFDM symbol corresponds to the hops in the transmission frequency bandwidth. A local ocsillator generally maintains the same frequency setting during the entire transmission period.

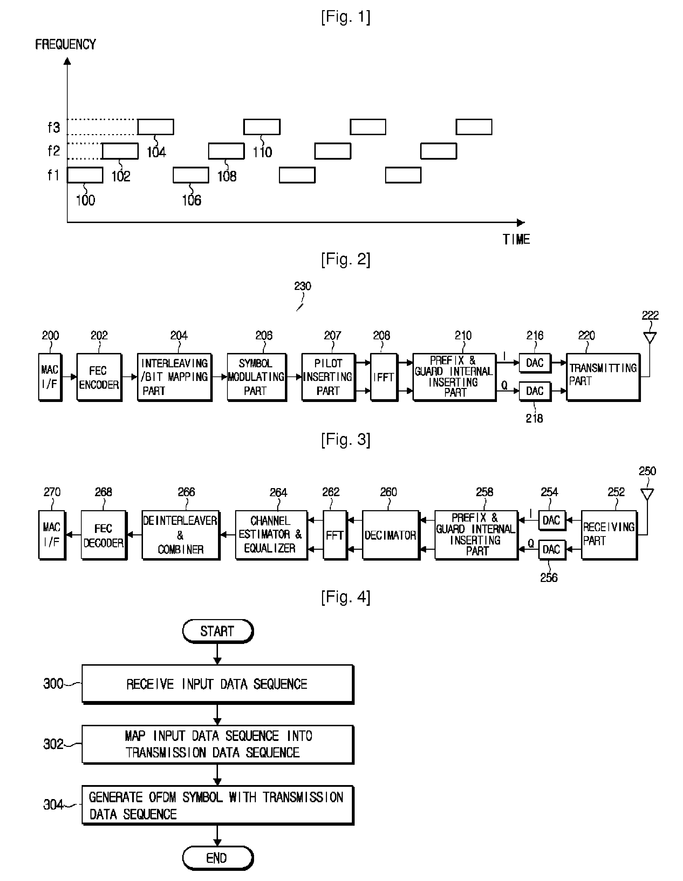

FIG. 1 shows a frequency hopping pattern of a MB-OFDM system. Referring to FIG. 1, each rectangle represents an OFDM symbol which carries 200 bits(or 100 bits). Three hop bandwidths(f1, f2, f3) facilitate frequency hopping among the symbols.

Each of the symbols 100, 102, 104 is modulated using carriers which are respectively different from each other according to the frequency bandwidths(f1, f2, f3). Accordingly, patterns repeats with respect to the next three symbols(106, 108, 110).

The frequency hopping technology is advantageous in reducing interference between neighboring UWB devices. However, this technology accompanies the following several problems. When the data is transmitted with lower rate than supported in the system, generally, the data bits are copied and modulated for transmission.

Accordingly, the same data bits can be modulated several times in the same subcarrier frequency, and as a result, the copied symbols fall into the same multipath and fading conditions. Accordingly, frequency diversity decreases.

Additionally, because the neighboring data bits usually have the same frequency, or are usually coded using the adjacent subcarrier, this also deteriorates frequency diversity. Accordingly, a data bit coding method, which can improve frequency diversity of not only the same data, but also the adjacent data bits, is demanded. Also, a coding method, which does not accompany a considerable amount of additional costs and increase of complication with existing transmitter and receiver, is required.

US 2004/081073 A1 relates to a multi-antenna OFDM system where a transmitter encodes traffic data in accordance with a coding scheme to obtain coded data. The coding scheme comprises a fixed-rate base code and a set of repetition and/or puncturing patterns for a set of code rates supported by the system. The transmitter interleaves the coded data in accordance with an interleaving scheme to obtain interleaved data. The transmitter next symbol-maps the interleaved data in accordance with a modulation scheme to obtain a stream of data symbols. The transmitter processes each pair of data symbols to obtain two pairs of transmit symbols for transmission from a pair of transmit antennas. The two pairs of transmit symbols may be transmitted from the pair of antennas, either (1) on the same subband in two OFDM symbol periods for space-time transmit diversity or (2) on two subbands in the same OFDM symbol period for space-frequency transmit diversity. A multiplexer provides the code bits from the repeating unit if the desired code rate is % and the code bits from the puncturing unit if the desired code rate is ½ or higher. A block interleaver then interleaves (i.e., reorders) the code bits across the 48 data subbands of the short OFDM symbol in accordance with the frequency interleaving scheme.

US 2004/178934 A1 relates to a bit interleaving scheme for a multi-band OFDM ultra-wideband (UWB) system. The encoded bits of the multi-band OFDM system are interleaved within each OFDM symbol and across OFDM symbols. In cases where the number of bits is less than $XN_{CBPS}$, the symbol interleaver is skipped; and only a tone interleaving operation is performed. The input bits are whitened using a scrambler, encoded using a convolutional code, interleaved, mapped onto an OFDM symbol, modulated into the appropriate sub-channel, and transmitted. A bit interleaving method comprises the steps of permuting coded bits of an OFDM symbol stream and generating interleaved OFDM symbols to implement a desired interleaved OFDM symbol pattern in response thereto; and permuting each group of bits associated with each interleaved OFDM symbol and generating interleaved OFDM tones within each OFDM symbol in response to the desired interleaved OFDM symbol pattern.

**Disclosure of Invention**

**Technical Problem**

Accordingly, an object of the present invention is to provide a method and a system which is capable of improving frequency diversity of a signal containing a plurality of OFDM symbols.

In particular, it is the object of the present invention to simplify the data bit coding method for OFDM signal processing.

**Technical Solution**

This object is solved by the subject matter of the independent claims.

Preferred embodiments are defined by the dependent claims.

The above object of the present invention can be substantially achieved by providing an OFDM(Orthogonal Frequency Division Multiplexing) signal processing method for improving a frequency diversity of a signal which contains a plurality of OFDM symbols therein, the OFDM signal processing method comprising the steps of: receiving an input data sequence, mapping the input data sequence by a predetermined mapping method into a transmission data sequence, and generating an OFDM symbol by using the transmission data sequence.

The input data sequence preferably has a bit order, and the mapping changes the bit order of the transmission data sequence.

The mapping preferably comprises at least one of repetition, shift, reversal, shift-plus-reversal, and reversal-plus-shift.

More preferably, the shift comprises a circulative shift.

Preferably, the step of applying IFFT(Inverse Fast Fourier Transform) with respect to the transmission data sequence, is additionally provided.

Here, it is preferable that the input data sequence is interleaved.

Additionally, the step of secondly mapping the transmission data sequence into a second transmission data sequence, is preferably provided.

It is more preferable to additionally provide the step of generating a second OFDM symbol by repeating the transmission data sequence.

Additionally, it is preferable that the step of mapping the transmission data sequence into a second transmission data sequence by performing a second mapping which comprises repetition, shift, reversal, shift-plus-reversal, and reversal-plus-shift, is further provided.

Preferably, the step of mapping the input data sequence into a second transmission data sequence by performing a predetermined second mapping operation and therefore transmitting the data as the OFDM symbols, is additionally provided.

Further, the step of generating a second transmissoin daa sequence by mapping the transmission data sequence and generating a second OFDM symbol by using the second transmission data sequence, is preferably added.

The above object of the present invention can also be substantially achieved by providing an OFDM(Orthogonal Frequency Division Multiplexing) transmitting apparatus, which comprises an interface which receives an input data sequence, and a processor connected with the interface, and maps the input data sequence into a transmission data sequence, and generates an OFDM symbol by using the transmission data sequence.

The processor preferably applies IFFT(Inverse Fast Fourier Transform) with respect to the transmission data sequence.

Preferably, the processor secondly maps the transmitting data sequence into a second transmission data sequence.

Further, the procsesor preferaby generates a second OFDM symbol by repeating the transmission data sequence.

Further, an OFDM(Orthogonal frequency division multiplexing) signal processing method for improving a frequency diversity of a signal which contains a plurality of OFDM symbols therein, according to the present invention includes the steps of: receiving an input data sequence, interleaving the input data sequence; shifting the input data sequence and generating the shifted input data sequence; generating an OFDM symbol by applying an IFFT(Inverse Fast Fourier Transform) with respect to the shifted input data sequence; exchanging an I and a Q components of a part of the OFDM symbol; and transmitting the exchanged OFDM symbol.

According to the present invention, an OFDM(Orthogonal Frequency Division Multiplexing) transmitting apparatus includes an interface which receives an input data sequence, and a processor connected with the interface, interleaves the input data sequence, shifts the input data sequence and generates the shifted input data sequence, generates an OFDM symbol by applying an IFFT(Inverse Fast Fourier Transform) with respect to the shifted input data sequence, exchanges an I and a Q components of a part of the OFDM symbol, generates an RF signal by modulating the exchanged OFDM symbol, and transmits the RF signal.

## Advantageous Effects

According to the present invention, by performing bit processing operations such as repetition, shift, reverse, shift-plus-reverse, and reverse-plus-shift with respect to incoming data bits, frequency diversity with respect to not only the same data, but also the adjacent dat bits, can be improved.

Additionally, because complex in achieving a hardware with respect to the existing digital transmitter and receiver does not increase, there is no increase of costs.

The foregoing embodiment and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

## Brief Description of the Drawings

The above aspects and features of the present invention will be more apparent by describing certain exemplary embodiments of the present invention with reference to the accompanying drawings, in which:

FIG. 1 is a view provided for explanation of a frequency hopping pattern according to a general MB-OFDM system.
FIG. 2 is a block diagram representing a UWB transmitter according to one embodiment of the present invention.
FIG. 3 is a block diagram representing a UWB receiver according to another embodiment of the present invention,
FIG. 4 is a flowchart provided for explanation of a process for improving a frequency diversity of a signal which contains an OFDM symbol according to one embodiment of the present invention,
FIG. 5 is a view representing the result of interleaving and repeat functions according to one embodiment of the present invention,
FIG. 6 is a block diagram representing an example of an interleaver and a bit mapping part for achieving interleaving and repeat functions of FIG. 4a,
FIG. 7 is a view representing a pattern of transmission data according to one embodiment of the present inveniton,
FIG. 8 is a view representing a pattern of transmission data according to another embodiment of the present invention,
FIG. 9 is a view representing a pttern of transmission data according to yet another embodiment of the present invention,
FIG. 10 is a block diagram representing a circuit for achieving interleaving and repeat functions according to an embodiment of the present invention, and
FIG. 11 is a block diagram representing a transmitter according to yet another embodiment of the present invention.

## Best Mode for Carrying Out the Invention

Hereinafter, the present invention will be described in detail with reference to illustrative accompanying drawings.

The present invention is applicable in a variety of ways, such as process, apparatus, combination of components, computer recording medium, or a computer network transmitting program commands via optical, or electronic communication links. The following description sets forth only an exemplary embodiment of the present invention, and one will appreciate that modifications can be made to the methods as described, or all the other possible types of the present invention, and the order of processes as described, without departing from the scope of the present invention.

Hereinbelow, an OFDM transmitting/receiving apparatus, and a signal processing method thereof, which is capable of improving frequency diversity of a signal containing a plurality of OFDM symbols, will be described. A sequence of data, which is input from the OFDM transmitter, is mapped into a transmission data sequence for the transmission with OFDM symbols. In the following embodiments of the present invention, the mapping operation includes a variety of proper operations, or a combination of the operations such as repetition, shift, reverse, shift-plus reverse, reverse-plus-shift.

Additionally, in certain embodiments, the transmission data sequence can be mapped into another transmission data sequence for the transmission with other OFDM symbols. In the same MB-OFDM system, in order to ensure different data rates according to different mapping operations, or in order to ensure the same data rate under different MB-OFDM systems, different mapping operations can be used. By generating a repeated input data sequence, bits for the OFDM symbols in different subcanier frequency can be extended, and more improved frequency diversity can be obtained.

FIG. 2 is a block diagram illustrating a UWB transmitter according to one embodiment of the present invention.

In a UWB transmitter according to the embodiment of the present invention, an OFDM technology is used. A FEC(Forward Error Correction) encoding part 202 encodes the data bits which are received thruogh a MAC(Medium Access Control) interface 200. Because the adjacent subcarriers often fall into the multipath and fading conditions, the interleaver prevents subsequent code bits from transmitting from the adjacent subcarriers with the same OFDM symbol. In this embodiment, the encoded bits can be interleaved by the plurality of OFDM symbols.

An interleaving/bit mapping part 204 performs one or more than one mapping operations with respect to the data bit. The bits can be mapped in the order of reverse, or shift or the combination of the two, and this will be described below. After the mapping, the data sequence is transmitted in the final form, that is, as an OFDM symbol. In this embodiment, the interleaving/bit mapping part 204 may perform a plurality of mapping operations with respect to the inputted bit sequence in order to generate a plurality of mapping results. Additionally, the interleaving/bit mapping part 204 performs the second mapping operation in order to generate another output which will be transmitted with the other OFDM symbol. In this embodiment where a plurality of mapping operations are performed, the mapping according to the above operations can be performed in the same, or different manner, depending on the system. The bandwidth of the transmitted signal according to the mapping is extended beyond the information bandwidth, and accordingly, additional frequency diversity is generated, and the transmitted signal can be more robust against multipath and interferences.

Next, a symbol modulating part 206 modulates the bits, which are interleaved and repeated, into a symbol. In the depicted embodiment, a pair of successive bits are ma pped into QPSK symbol by using the QPSK modulation. In addition to the QPSK modulation, any other suitable modulations can be employed. A pilot inserting part 207 inserts a pilot tone in the modulated symbol. An IFFT (Inverse Fast Fourier Transform) part 208 block-wise converts the symbol into a waveform in the time domain (or, OFDM symbol). In certain embodiments, a prefix/GI(guard interval) inserting part 210 adds a guard interval and circulation/zero prefix in each of the repeated OFDM symbols, in front of the preamble. Additionally, in certain embodiments, interference and amplitude clipping may be selectively applied to the OFDM symbol. A D/A converter 216, 218 converts the I(Inphase) and Q(Quadrature) components of a baseband OFDM signal from digital into analogue form. Accordingly, an analogue signal is outputted and sent to the transmitting part 220 to be sent out via an antenna 222.

FIG. 3 is a block diagram representing a UWB receiver according to one embodiment of the present invention. According to this embodiment, an OFDM signal, which is received through the antenna 250 of the receiving part 252, is divided into I and Q components, and converted into baseband. An A/D converter 254, 256 converts the baseband signal into digital. In this embodiment, a decimator 258 selectively processes the digital signal in the baseband. A prefix/GI removing part 260 removes the prefix and the GI. A FFT(Fast Fourier Transform) part 262 converts a OFDM waveform in the time domain into a sample in the frequency domain. A channel estimation/equalization part 264 processes the sample in the frequency domain, and minimizes the influence of the multipath propagation. After the equalization, the received subcarrier and the sample show the similar pattern with that of the QPSK symbol noise, or with the QPSK symbol noise which is derived from the real and imaginary numbers of the QPSK symbol. In either case, the symbol is called a 'soft symbol'.

A deinterlever/combiner 266 receives a soft symbol, and un-does the operations by the interleaver/bit mapping part 204 of FIG. 2a. The same soft symbols, which are received a plurality of times, are combined into one. This combining process can be achieved in various modes. In certain embodiments, a MR(Maximal-Ratio) combining method is used, and accordingly, the received soft symbols are cumulatively summed according to the estimated amplitude of each of the corresponding subcarriers that has the received soft symbol. Subsequently, the summed soft symbols are outputted as one symbol. Next, deinterleaving is performed with respect to the final output of the soft symbol, and therefore, the operation by the interleaver is undone. A FEC decoder 268 decodes the deinterleaved symbol sequence. The decoded signal is transmitted to the MAC interface 270 for the processing of remaining signals.

FIG. 4 is a flowchart explaining the process of improving frequency diversity of a signal which contains OFDM symbols according to one embodiment of the present invention. First, an input data sequence is received (S300). Next, the input dat sequence is mapped into transmission data sequence (S302). The mapping process may include various proper operations such as shift, reverse, repetition, shift-plus-reverse, and reverse-plus-shift, or a combination of the operations. The mapping operations can be properly selected according to the embodiments. Next, an OFDM symbol is generated by using the transmission data sequence (S304). As the mapping operations are selectively repeated with respect to the same input data, another OFDM symbol is generated. In certain embodiments, different mapping oeprations can be employed to generate different transmission data sequences.

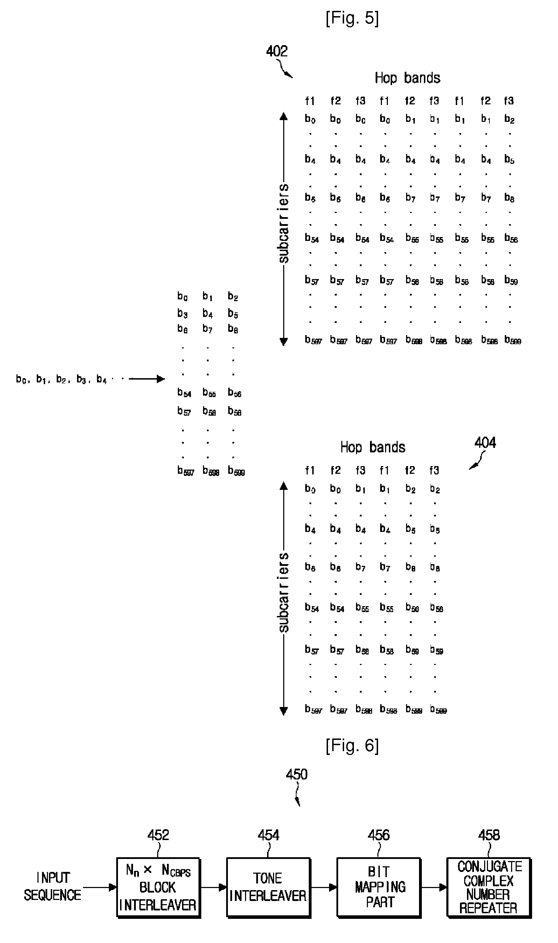

FIG. 5 is a view provided for explanation of the result of interleaving and bit mapping according to one embodiment of the present invention. According to this embodiment, the input bit sequence($b_0$, $b_1$, $b_2$, $b_3$,...) is transmitted to the interleaver. First, the data bits are interleaved into a first sequence of bits ($b_0$, $b_0$, $b_3$, $b_6$,...$b_{597}$), a second sequence of bits ($b_1$,$b_4$,$b_7$,...$b_{598}$), and a third sequence of bits ($b_2$,$b_5$,$b_8$,...$b_{599}$). In certain embodiments, the first, second and third sequences are respectively mapped into different subcarriers at wider intervals by the tone interleaver. The depth of the interleaving depends on the embodiment as employed. For example, if 10 tone interleaving depth is used, the first sequence after the tone interleaving will be $b_0$, $b_{30}$, $b_{60}$ ,..., $b_{597}$, the second sequence after the tone interleaving will be $b_1$, $b_{31}$, $b_{61}$,..., $b_{598}$, and the third sequence after the tone interleaving will be $b_2$, $b_{32}$, $b_{62}$,..., $b_{599}$, respectively. Next,

the input sequences are respectively modulated into OFDM symbols by using the subcarriers at the hop bandwidth. In certain embodiments, the modulation can employ multiplication of numbers of respective sequences by the corresponding subcarrier signals. Next, the same bit sequence repeats according to the same order, and modulated into different OFDM symbols using the subcarriers of next hop bandwidth. With reference to the drawings, the transmission data pattern(402, 404) are used to generate OFDM symbol which is transmitted at different rates. The sequences of the transmission pattern are modulated, and OFDM symbols are generated using the subcarriers of the hop bandwidth at the first row of each column. For the convenience of explanation, the bandwidth hopping among the three frequency bandwidths(f1, f2, f3) follows the sequential order as exemplified in this embodiment. However, in certain embodiments, the number and/or the order of of hops can be varied.

According to this particular embodiment, repetition is used as a mapping operation. Each of the input bit sequences has 600 data bits which are repeated four times in the pattern 402 of 12 OFDM symbols are transmitted, and 1/4 transmission data rate, which is maximum, is btained. Because two OFDM symbols from the same input bit are modulated using the same subcarrier frequency, deterioration of frequency diversity is somewhat avoided according to the repetition. For example, the bit sequence of $b_0$ - $b_{597}$ is initially modulated by using the subcarrier of hop bandwidths(f1, f3), and re-modulated with respect to the hop bandwidth(f1). Because the same symbol is transmitted with respect to the same subcarrier, this means that the data is subject to the similar multipath and fading conditions. Therefore, the frequency diversity deteriorates. In the bit pattern 404, the bit sequence is repeated twice, and is not repeated at the subcarrier frequency which has the same repeatition bit sequence. Therefore, the problem of frequency diversity is somewhat different. However, because the adjacent bits such as the first bit($b_0$) and the second bit($b_1$) can be transmitted with the same subcarrier frequency, the bits are still subject to the similar fading conditions.

FIG. 6 is a block diagram illustrating the interleaver/bit mapping part, which is used in the realization of the interleaving and repetition operations of FIG. 5. In this particular example, the input data sequence is firstly interleaved by using the $N_h \times N_{CBPS}$ block interleaver 452, where $N_h$ is the function of the number of hop bandwidths, and $N_{CBPS}$ is a number of code bits (set to 200 in the following example) per OFDM symbol before the repetition.

The interleaver 452 has the input bits recorded in the column-wise direction as the $N_h \times N_{CBPS}$ matrix, and read out according to the order of row-wise direction. The sub sequence of successive bits of $N_h$ is extended to the OFDM symbol (or hop bandwidth) of N . Accordingly, the output bits are interleaved by the second interleaver 454, which is so-called 'tone interleaver', and with respect to the bit block of $N_{CBPS}$ in size, the $N_{CBPS}$ bits of the respective OFDM symbols are divided into different tones (subcarriers).

The bit mapping part 456 performs one or more mapping operations with respect to the interleaved bits. The mapping operations vary according to the embodiments, and according to variables such as operation data rates of a system. In this particular example, repetitive function is used to map the input bits into the pattern same as the bit patterns 402, 404. The output from the bit mapping part 456 is selectively inputted to a conjugate complex number repeater 458 and repeated in each block of the $N_{CBPS}$ block. Accordingly, the block is extended to correspond to one OFDM symbol. In certain embodiments, certain bits are inverted during the repetition into a pair, and mapped into QPSK symbol block which is in symmetry with the conjugate complex number with reference to the middle line thereof. Accordingly, IFFT output has the real number value. Additionally, the conjugate complex number processing can be omitted in certain embodiments. In the above embodiment, the mapping operations are performed prior to the conjugate complex number processing. However, in certain embodiments, the mapping operations may be performed after the conjugate complex number processing, or before and after the conjugate complex number processing.

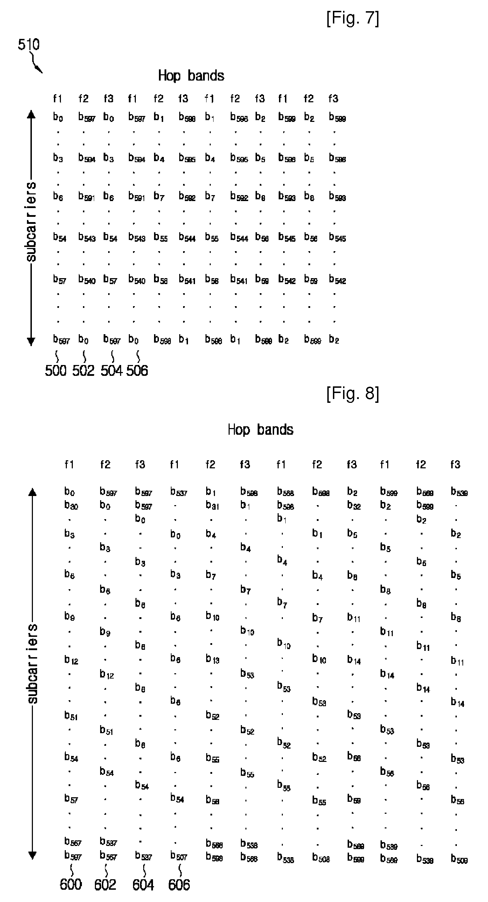

FIG. 7 is a view illustrating the pattern of transmitted data according to an embodiment of the present invention. In another embodiment, different extension rate is possible, however, the extension rate of 4 will be used in this particular embodiment for the convenience of explanation. In this embodiment, the column 500 represents the first input data sequence, which is interleaved bit sequence of ($b_0$-$b_{597}$), and it is modulated by using the subcarrier of the hop bandwidth(f1). In this embodiment, the mapping operation of reversal is used to generate the transmission data sequence. In other words, the input data bit sequence is reversed, and modulated by the subcarrier of the hop bandwidth(f2). The above operations repeat with respect to the reversed sequence, and therefore, the transmission data sequence 504 is generated for the transmission at the hop bandwidth(f3). As the above operations repeat, the transmission data sequences 506 for the transmission at the hop bandwidth(f1) are generated, and similarly, the respective transmission data sequences are also generated. In certain embodiments, instead of two times of inversion, transmission data sequence related with the first and second hop bandwidths(f1, f2) may be stored and repeated with respect to the third hop bandwidth(f3) and after, to generate the data sequence related with the third hop bandwidth(f3) and the next hop bandwidth(f1) and the next hop bandwidth(f2). Likewise, the input data bit sequence($b_1$-$b_{598}$) is used to generate four successive transmission data sequences corresponding to the hop bandwidths(f2, f3, f1 and f2), and the input data bit sequence of ($b_2$-$b_{599}$) is used to generate four successive transmission data sequences corresponding to the hop bandwidths(f3, f1, f2 and f3). An interleaver/bit mapping block, which is similar to the interleaver/bit mapping part 450 of FIG. 4b, generates bit pattern 510. In this embodiment, the bit mapping part is constructed such that it reverses the order of the mapping bits.

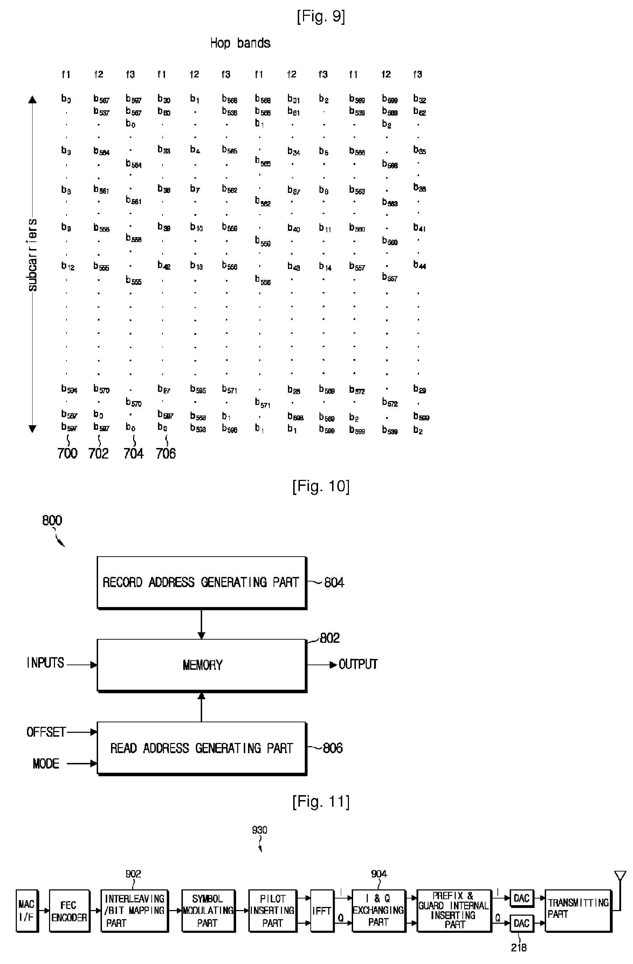

In certain embodiments, the mapping includes the shifting operation. FIG. 9 shows the pattern of transmission data according to another embodiment of the present invention.

According to another embodiment of the present invention, the data sequence 600 represents that the input bit sequence($b_0$-$b_{597}$) is mapped with the subcarrier of the hop bandwidth(f1). The data sequence is then shifted in a circulation manner, and modulated by using the subcarrier of the hop bandwidth(f2) to generate a new sequence 602. As the above process repeats, data sequences 604, 606 are successively generated. Herein, bits are shifted in every mapping operation by the unit of one order. However, shift at proper length interval(L) may also be used. In certain embodiments, the value L is selected such that all the repeated bits and their adjacent bits are extended among the remote subcarriers to thereby reduce requirement for data correction for multipath and fading.

In another example, the mapping process may include shift-plus-reverse operation in which the input data sequence is firstly shifted and then reversed, and a reverse-plus-shift operation in which the input data sequence is reversed and then shifted. FIG. 9 shows the pattern of transmission data according to yet another embodiment of the present invention. In this embodiment, not only the shift-plus-reverse, but also the shift operation can be used. The first input data sequence of the column 700 is for generating a first OFDM symbol with respect to the hop bandwidth(f1). Subsequently, as the input data sequence is circulatively shifted and reversed by the unit of one bit, the transmission data sequence with respect to the hop bandwidth(f2), which is represented by the column 702, is generated. In another embodiment, different shift intervals can be propery used, and the direction of shift can also be selected differently. Next, the shift operation is performed with respect to a new sequence, and therefore, a transmission data sequence with respect to the hop bandwidth(f3) represented by the sequence 704, is generated. Then shift and reversal are performed with respect to the data sequence 704, and another data sequence 706 is generated. The similar conversion is performed with respect to the input data sequence($b_1$-$b_{598}$) and the input data sequence($b_2$-$b_{599}$) so that four OFDM symbols are respectively generated.

The circulative shift operation in the above explanation can be represented by the hollowing equation:

$$\text{Equation 1}$$
$$b[i] = a_T[m(i) \times N_{CBPS} + \text{mod}(i + m(i) \times N_{cyc}, N_{CBPS})],$$
$$\text{where} \quad m(i) = \lfloor i / N_{CBPS} \rfloor, \text{ where } i = 0,..,N_{CBP6S} - 1$$

where, $a_T[i]$ is an input data sequence, and $b[i]$ is a transmission data sequence after the circulative shift operation with respect to the input data sequence.

FIG. 10 is a block diagram of a circuit which is used to achieve interleaving and repetition operations according to one embodiment of the present invention. According to this embodiment, both of the operations are performed at a circuit 800. In certain embodiments, certain operations may be achieved by separate components. The input data sequence is transmitted to a memory 802. A record address generating part 804 determines memory addresses for recording bits of respective input data sequences so that the stored bit sequences can be interleaved. In this embodiment, the record address generating part 804 performs two control operations. That is, an offset control in which offset position for storing the interleaved sequences is determined for data reading, and a mode control in which bits are read in forward or backward order in the data reading, are performed. The data are read out from the memory 802 a plurality of times and generate repetitive transmission data sequences. In certain embodiemnts, interleaving and mapping operations can be achieved by using separate components.

FIG. 11 is a block diagram of a transmitting apparatus according to yet another embodiment of the present invention. The reverse operation with respect to the bit order before the IFFT operation has the identical effect as the process of exchanging real number(I) and imaginary number(Q) of the complex number QPSK symbol from the output of the IFFT. Therefore, the reverse operation can be performed at the front end of the IFFT as shown in the transmitting apparatus 230 of FIG. 2. Among the components of the transmitting apparatus 930, the similar elements to those of the transmitting apparatus 230 perform the similar functions. Accordingly, the interleaver/ bit mapping part 902 performs both the interleaving and shifting. The exchanging part 904 performs reversal of bit order. The exchanging part 904 directly transmits the first OFDM symbol, and exchanges the 1 and Q components of the second OFDM symbol.

The exchange of 1 and Q components of the second OFDM symbol in the exchanging part 904 can be expressed by the following equations 2:

$$C_{D,2n}[l] = d_{frame}\left[\frac{N_D}{2} \times (2n - N_{sync} - N_{hdr}) + l\right]$$

$$C_{D,2n+1}[l] = p_{spread}[n] \times \left\{imag\left(d_{frame}\left[\frac{N_D}{2} \times (2n - N_{sync} - N_{hdr}) + (N_D - 1 - l)\right]\right)\right.$$

$$\left. + j\,real\left(d_{frame}\left[\frac{N_D}{2} \times (2n - N_{sync} - N_{hdr}) + (N_D - 1 - l)\right]\right)\right\}$$

where, $C_{D,2n}[1]$ denotes an example of the first OFDM symbol, $C_{D,2n+1}[1]$ is an example of the second OFDM symbol, $d_{frame}[k]$ is an OFDM symbol inputted to the exchanging part 904 with k=0, 1, 2, ..., and $N_D$ is a constant, for example, a constant 100. which groups the OFDM symbols by the unit of certain numbers.

Further, N denotes a number of data subcarriers, $N_{sync}$ is a number of symbols of a PLCP preamble, $N_{ha}$ is a number of symbols of a PLCP header, imag(.) is an Q component of an input OFDM symbol, and real(.) is a I component of an input OFDM symbol.

Further,

$$Pspread[n] = p[\mathrm{mod}(n - \frac{N_{sync}}{2} + 6, N_{FFT} - 1)]$$

, where p[.] is a pseudo random sequence which is 127 in length.

Accordingly, the receiving end combines the OFDM symbols using proper combining techniques such as MR combining, to generate soft symbol, which is usually called 'soft bit'. Then the order of every second bit blocks of the soft bits is reversed. The soft symbols are deinterleaved by the deinterleaver with respect to the NCBPS soft bit block, to reverse effect by the tone interleaver of the transmitting apparatus, and then reverses the effect of the first interleaver of the transmitting apparatus by the use of $N_h \times N_{CBPS}$.

## Claims

1. An Orthogonal Frequency Division Multiplexing, OFDM, signal processing method for improving a frequency diversity of a signal which contains a plurality of OFDM symbols therein, the OFDM signal processing method comprising the steps of:

   receiving an input data sequence;
   interleaving the input data sequence;
   shifting the interleaved data sequence in a circular manner and generating the shifted input data sequence;
   generating an OFDM symbol by applying an Inverse Fast Fourier Transform, IFFT, with respect to the shifted input data sequence, **characterized by**:

   exchanging (904) an I and a Q components of the generated OFDM symbol to generate another OFDM symbol having exchanged I and Q components.

2. The OFDM signal processing method of claim 1, wherein the I and Q component exchange is performed according to the following equation with respect to the OFDM symbol with $d_{frame}[k]$, k = 0, 1, 2,...,

$$C_{D,2n}[l] = d_{frame}\left[\frac{N_D}{2} \times (2n - N_{sync} - N_{hdr}) + l\right]$$

$$C_{D.2n+l}[l] = P_{spread}[\text{n}] \times \left\{ imag\left( d_{frame}\left[ \frac{N_D}{2} \times (2n - N_{sync} - N_{hdr}) + (N_D - 1 - l) \right] \right) \right.$$

$$\left. + j\ real\left( d_{frame}\left[ \frac{N_D}{2} \times (2n - N_{sync} - N_{hdr}) + (N_D - 1 - l) \right] \right) \right\}$$

where, $N_D$ denotes a constant value for grouping the OFDM symbols being equal to the number of data subcarriers, $N_{sync}$ is a number of symbols of a PLCP preamble, $d_{frame}[k]$ is an OFDM symbol inputted to an exchanging part, and $N_{hdr}$ is a number of symbols of a PLCP header.

3. The OFDM signal processing method of claim 2, wherein the Pspread is calculated by the following equation:

$$Pspread[n] = p[\text{mod}(n - \frac{N_{sync}}{2} + 6,\ N_{FFT} - 1)]$$

where, p[.] denotes a pseudo random sequence of a predetermined length.

4. An Orthogonal Frequency Division Multiplexing, OFDM, signal processing apparatus, comprising:

  an interface which is configured to received an input data sequence; and
  a processor connected with the interface, the processor being configured to interleave the input data sequence, shift the interleaved data sequence in a circular manner and generate the shifted input data sequence, generate an OFDM symbol by applying an Inverse Fast Fourier Transform, IFFT, with respect to the shifted input data sequence, the signal processing apparatus being further **characterized by** the processor being configured to exchange an I and Q components of the generated OFDM symbol to generate another OFDM symbol having exchanged I and Q components.

5. The OFDM signal processing apparatus of claim 4, wherein the processor is configured to exchange the I and Q components according to the following equations with respect to the OFDM symbol with $d_{frame}[k]$, k = 0, 1, 2,...:

$$C_{D.2n}[l] = d_{frame}\left[ \frac{N_D}{2} \times (2n - N_{sync} - N_{hdr}) + l \right]$$

$$C_{D.2n+l}[l] = P_{spread}[\text{n}] \times \left\{ imag\left( d_{frame}\left[ \frac{N_D}{2} \times (2n - N_{sync} - N_{hdr}) + (N_D - 1 - l) \right] \right) \right.$$

$$\left. + j\ real\left( d_{frame}\left[ \frac{N_D}{2} \times (2n - N_{sync} - N_{hdr}) + (N_D - 1 - l) \right] \right) \right\}$$

where, $N_D$ denotes a constant value for grouping the $OF_{DM}$ symbols being equal to the number of data subcarriers, $N_{sync}$ is a number of symbols of a PLCP preamble, $d_{frame}[k]$ is an OFDM symbol inputted to an exchanging part, and $N_{hdr}$ is a number of symbols of a PLCP header.

6. The OFDM signal processing apparatus of claim 5, wherein the processor is configured to calculate Pspread by the following equation;

$$Pspread[n] = p[\text{mod}(n - \frac{N_{sync}}{2} + 6,\ N_{FFT} - 1)]$$

where, p[.] denotes a pseudo random sequence of a predetermined length.

7. A recording medium recorded with a program for improving a frequency diversity of a signal which contains a plurality of Orthogonal Frequency Division Multiplexing, OFDM, symbols, the recording medium readable by a computer and being recorded with a program to execute the steps of:

receiving an input data sequence;
interleaving the input data sequence;
shifting the interleaved data sequence in a circular manner and generating the shifted input data sequence;
generating an OFDM symbol by applying an Inverse Fast Fourier Transform, IFFT, with respect to the shifted input data sequence;
exchanging an I and an Q components of the generated OFDM symbol to generate another OFDM symbol having exchanged I and Q components.

8. The recording medium of claim 7, wherein the I and Q component exchange with respect to the OFDM symbol with $d_{frame}[k]$, k = 0, 1, 2,.., is performed by the following equations:

$$C_{D.2n}[l] = d_{frame}\left[\frac{N_D}{2} \times (2n - N_{sync} - N_{hdr}) + l\right]$$

$$C_{D.2n+l}[l] = P_{spread}[n] \times \left\{imag\left(d_{frame}\left[\frac{N_D}{2} \times (2n - N_{sync} - N_{hdr}) + (N_D - 1 - l)\right]\right)\right.$$

$$\left. + j\ real\left(d_{frame}\left[\frac{N_D}{2} \times (2n - N_{sync} - N_{hdr}) + (N_D - 1 - l)\right]\right)\right\}$$

where, $N_D$ denotes a constant value for grouping the OFDM symbols being equal to the number of data subcarriers, $N_{sync}$ is a number of symbols of a PLCP preamble, $d_{frame}[k]$ is an OFDM symbol inputted to an exchanging part, and $N_{hdr}$ is a number of symbols of a PLCP header.

9. The recording medium of claim 8, wherein the Pspread is calculated by the following equation:

$$Pspread[n] = p[\text{mod}(n - \frac{N_{sync}}{2} + 6, N_{FFT} - 1)]$$

where, p[.] denotes a pseudo random sequence of a predetermined length.

**Patentansprüche**

1. Signalverarbeitungsverfahren für ein orthogonales Frequenzmultiplexverfahren, OFDM, zur Verbesserung einer Frequenzvielfalt eines Signals, in welchem eine Vielzahl von OFDM-Symbolen enthalten sind, wobei das OFDM-Signalverarbeitungsverfahren die Schritte umfasst:

Empfangen einer Eingabedatensequenz;
Verschachteln der Eingabedatensequenz;
Verschieben der verschachtelten Datensequenz auf ringförmige Weise und Erzeugen der verschobenen Eingabedatensequenz;
Erzeugen eines OFDM-Symbols durch Anwenden einer inversen Fast Fourier Transformation, IFFT, auf die verschobene Eingabedatensequenz,
**gekennzeichnet durch**:

Austauschen (904) einer I- und einer Q-Komponente des erzeugten OFDM-Symbols, um ein anderes OFDM-Symbol zu erzeugen, welches ausgetauschte -I und Q-Komponenten hat.

2. OFDM-Signalverarbeitungsverfahren nach Anspruch 1, wobei das Vertauschen der I-und Q-Komponenten entsprechend der folgenden Gleichung auf das OFDM-Symbol mit $d_{frame}[k]$, k = 0, 1, 2,..., angewendet wird

$$C_{D.2n}[l] = d_{frame}\left[\frac{N_D}{2} \times (2n - N_{sync} - N_{hdr}) + l\right]$$

$$C_{D.2n+1}[l] = P_{spread}[n] \times \left\{ imag\left( d_{frame}\left[\frac{N_D}{2} \times (2n - N_{sync} - N_{hdr}) + (N_D - 1 - l)\right]\right)\right.$$

$$\left. + j\, real\left( d_{frame}\left[\frac{N_D}{2} \times (2n - N_{sync} - N_{hdr}) + (N_D - 1 - l)\right]\right)\right\}$$

wobei $N_D$ einen konstanten Wert zur Gruppierung der OFDM-Symbole bezeichnet, welcher gleich zu der Anzahl von Datenunterträgern ist, $N_{sync}$ eine Anzahl von Symbolen einer PLCP-Präambel ist, $d_{frame}[k]$ ein OFDM-Symbol ist, welches in ein Vertauschungsteil eingegeben wird, und $N_{hdr}$ eine Anzahl von Symbolen eines PLCP-Headers ist.

3. OFDM-Signalverarbeitungsverfahren nach Anspruch 2, wobei der Pspread entsprechend der folgenden Gleichung berechnet wird:

$$Pspread[n] = p[\mod(n - \frac{N_{sync}}{2} + 6, N_{FFT} - 1)]$$

wobei p[.] eine pseudozufällige Sequenz einer vorgegebenen Länge bezeichnet.

4. Vorrichtung zur Signalverarbeitung für ein orthogonales Frequenzmultiplexverfahren, OFDM, umfassend:

eine Schnittstelle, welche eingerichtet ist, eine Eingabedatensequenz zu empfangen; und
einen Prozessor, welcher mit der Schnittstelle verbunden ist, wobei der Prozessor eingerichtet ist, die Eingabedatensequenz zu verschachteln, die verschachtelte Eingabedatensequenz auf ringförmige Weise zu verschieben und eine verschobene Eingabedatensequenz zu erzeugen, ein OFDM-Symbol durch Anwenden einer inversen Fast Fourier Transformation, IFFT, auf die verschobene Eingabedatensequenz zu erzeugen, wobei die Vorrichtung zur Signalverarbeitung weiter **dadurch gekennzeichnet ist, dass** der Prozessor eingerichtet ist, eine I- und Q-Komponente des erzeugten OFDM-Symbols auszutauschen, um ein anderes OFDM-Symbol zu erzeugen, welches ausgetauschte I- und Q-Komponenten hat.

5. Vorrichtung zur OFDM-Signalverarbeitung nach Anspruch 4, wobei der Prozessor eingerichtet ist, die I- und Q-Komponenten entsprechend der folgenden Gleichungen bezüglich des OFDM-Symbols mit $d_{frame}[k]$, k = 0, 1, 2,... auszutauschen:

$$C_{D.2n}[l] = d_{frame}\left[\frac{N_D}{2} \times (2n - N_{sync} - N_{hdr}) + l\right]$$

$$C_{D.2n+1}[l] = P_{spread}[n] \times \left\{ imag\left( d_{frame}\left[\frac{N_D}{2} \times (2n - N_{sync} - N_{hdr}) + (N_D - 1 - l)\right]\right)\right.$$

$$\left. + j\, real\left( d_{frame}\left[\frac{N_D}{2} \times (2n - N_{sync} - N_{hdr}) + (N_D - 1 - l)\right]\right)\right\}$$

wobei $N_D$ einen konstanten Wert zur Gruppierung der OFDM-Symbole bezeichnet, welcher gleich zu der Anzahl von Datenunterträgern ist, $N_{sync}$ eine Anzahl von Symbolen einer PLCP-Präambel ist, $d_{frame}[k]$ ein OFDM-Symbol ist, welches in ein Vertauschungsteil eingegeben wird, und $N_{hdr}$ eine Anzahl von Symbolen eines PLCP-Headers ist.

6. Vorrichtung zur OFDM-Signalverarbeitung nach Anspruch 5, wobei der Prozessor eingerichtet ist, den Pspread entsprechend der folgenden Gleichung zu berechnen:

$$Pspread[n] = p[\mathrm{mod}(n - \frac{N_{sync}}{2} + 6, N_{FFT} - 1)]$$

wobei p[.] eine pseudozufällige Sequenz einer vorgegebenen Länge bezeichnet.

7. Aufzeichnungsmedium, auf dem ein Programm zur Verbesserung einer Frequenzvielfalt eines Signals aufgezeichnet ist, wobei das Signal eine Vielzahl von Symbolen eines orthogonalen Frequenzmultiplexverfahrens, OFDM, enthält, wobei das Aufzeichnungsmedium von einem Computer lesbar ist und auf dem ein Programm aufgezeichnet ist, um die Schritte auszuführen:

Empfangen einer Eingabedatensequenz;
Verschachteln der Eingabedatensequenz;
Verschieben der verschachtelten Datensequenz auf ringförmige Weise und Erzeugen der verschobenen Eingabedatensequenz;
Erzeugen eines OFDM-Symbols durch Anwenden einer inversen Fast Fourier Transformation, IFFT, auf die verschobene Eingabedatensequenz; und
Austauschen (904) einer I- und einer Q-Komponente des erzeugten OFDM-Symbols, um ein anderes OFDM-Symbol zu erzeugen, welches ausgetauschte I- und Q-Komponenten hat.

8. Aufzeichnungsmedium nach Anspruch 7, wobei das Austauschen der I- und Q-Komponente bezüglich des OFDM-Symbols mit $d_{frame}[k]$, k = 0, 1, 2,... entsprechend der folgenden Gleichungen erfolgt:

$$C_{D.2n}[l] = d_{frame}\left[\frac{N_D}{2} \times (2n - N_{sync} - N_{hdr}) + l\right]$$

$$C_{D.2n+1}[l] = P_{spread}[\mathrm{n}] \times \left\{ imag\left(d_{frame}\left[\frac{N_D}{2} \times (2n - N_{sync} - N_{hdr}) + (N_D - 1 - l)\right]\right) \right.$$

$$\left. + j\ real\left(d_{frame}\left[\frac{N_D}{2} \times (2n - N_{sync} - N_{hdr}) + (N_D - 1 - l)\right]\right) \right\}$$

wobei $N_D$ einen konstanten Wert zur Gruppierung der OFDM-Symbole bezeichnet, welcher gleich zu der Anzahl von Datenunterträgern ist, $N_{sync}$ eine Anzahl von Symbolen einer PLCP-Präambel ist, $d_{frame}[k]$ ein OFDM-Symbol ist, welches in ein Vertauschungsteil eingegeben wird, und $N_{hdr}$ eine Anzahl von Symbolen eines PLCP-Headers ist.

9. Aufzeichnungsmedium nach Anspruch 8, wobei der Pspread entsprechend der folgenden Gleichung berechnet wird:

$$Pspread[n] = p[\mathrm{mod}(n - \frac{N_{sync}}{2} + 6, N_{FFT} - 1)]$$

wobei p[.] eine pseudozufällige Sequenz einer vorgegebenen Länge bezeichnet.

**Revendications**

1. Procédé de traitement du signal par multiplexage par répartition orthogonale de la fréquence, OFDM, permettant d'améliorer la diversité en fréquence d'un signal qui contient une pluralité de symboles de multiplexage OFDM, le procédé de traitement du signal par multiplexage OFDM comprenant les étapes suivantes :

   la réception d'une séquence de données en entrée,
   l'entrelacement de la séquence de données en entrée,
   le décalage de la séquence de données entrelacées de manière circulaire et la génération de la séquence de données en entrée décalées,
   la génération d'un symbole de multiplexage OFDM en appliquant une transformation rapide de Fourier inverse, IFFT, par rapport à la séquence de données en entrée décalées, **caractérisé par** :

   l'échange (904) d'une composante I et d'une composante Q du symbole de multiplexage OFDM généré afin de générer un autre symbole de multiplexage OFDM présentant des composantes I et Q échangées.

2. Procédé de traitement de signal par multiplexage OFDM selon la revendication 1, dans lequel l'échange des composantes I et Q est effectué conformément à l'équation suivante, par rapport au symbole de multiplexage OFDM avec $d_{frame}$ [k], k = 0, 1 , 2 , ...,

$$C_{D,2n}[l] = d_{frame}\left[\frac{N_D}{2} \times (2n - N_{sync} - N_{hdr}) + l\right]$$

$$C_{D,2n+1}[l] = P_{spread}[n] \times \left\{ \begin{array}{l} imag\ (d_{frame}\left[\frac{N_D}{2} \times (2n - N_{sync} - N_{hdr}) + (N_D - 1 - l)\right]) \\ + jreal\ (d_{frame}\left[\frac{N_D}{2} \times (2n - N_{sync} - N_{hdr}) + (N_D - 1 - l)\right]) \end{array} \right\}$$

   où $N_D$ indique une valeur constante permettant de regrouper les symboles de multiplexage OFDM, égaux au nombre de sous porteuses de données, $N_{sync}$ représente le nombre de symboles d'un préambule de type PLCP, $d_{frame}$ [k] est un symbole de multiplexage OFDM appliqué en entrée d'une partie d'échange et $N_{hdr}$ représente le nombre de symboles d'un en-tête de type PLCP.

3. Procédé de traitement de signal par multiplexage OFDM selon la revendication 2, dans lequel la valeur Pspread est calculée par l'équation suivante :

$$Pspread[n] = p\left[\mod(n - \frac{N_{sync}}{2} + 6, N_{FFT} - 1)\right]$$

   où p [ ] indique une séquence pseudo aléatoire de longueur prédéterminée.

4. Appareil de traitement du signal par multiplexage par répartition orthogonale de fréquence, OFDM, comprenant :

   une interface qui est configurée pour recevoir une séquence de données en entrée, et
   un processeur relié à l'interface, le processeur étant configuré pour entrelacer la séquence de données en entrée, pour décaler la séquence de données entrelacées de manière circulaire et pour générer la séquence de données en entrée décalées, afin de générer un symbole de multiplexage OFDM en appliquant une transformée rapide de Fourier inverse, IFFT, par rapport à la séquence de données en entrée décalées, l'appareil de traitement du signal étant en outre **caractérisé en ce que** le processeur est configuré pour échanger une composante I et une composante Q du symbole de multiplexage OFDM généré afin de générer un autre symbole de multiplexage OFDM présentant des composantes I et Q échangées.

**5.** Appareil de traitement de signal par multiplexage OFDM selon la revendication 4, dans lequel le processeur est configuré pour échanger les composantes I et Q en fonction des équations suivantes par rapport au symbole de multiplexage OFDM avec $d_{frame}$ [k], k = 0, 1, 2,...,

$$C_{D,2n}[l] = d_{frame}\left[\frac{N_D}{2} \times (2n - N_{sync} - N_{hdr}) + l\right]$$

$$C_{D,2n+1}[l] = P_{spread}[n] \times \left\{\begin{array}{l} imag\ (d_{frame}\left[\frac{N_D}{2} \times (2n - N_{sync} - N_{hdr}) + (N_D - 1 - l)\right]) \\ + jreal\ (d_{frame}\left[\frac{N_D}{2} \times (2n - N_{sync} - N_{hdr}) + (N_D - 1 - l)\right]) \end{array}\right\}$$

où $N_D$ indique une valeur constante permettant de regrouper les symboles de multiplexage OFDM égaux au nombre de sous porteuses de données, $N_{sync}$ représente le nombre de symboles d'un préambule de type PLCP, $d_{frame}$ [k] est un symbole de multiplexage OFDM appliqué en entrée d'une partie d'échange et $N_{hdr}$ représente le nombre de symboles d'un en-tête de type PLCP.

**6.** Appareil de traitement de signal par multiplexage OFDM selon la revendication 5, dans lequel le processeur est configuré pour calculer la valeur Pspread par l'équation suivante :

$$Pspread[n] = p\left[\mathrm{mod}(n - \frac{N_{sync}}{2} + 6, N_{FFT} - 1)\right]$$

où p [ ] indique une séquence pseudo aléatoire de longueur prédéterminée.

**7.** Support d'enregistrement sur lequel est enregistré un programme permettant d'améliorer la diversité en fréquence d'un signal qui contient une pluralité de symboles de multiplexage par répartition orthogonale de la fréquence, OFDM, le support d'enregistrement pouvant être lu par un ordinateur et support sur lequel est enregistré un programme permettant exécuter les étapes suivantes :

    la réception d'une séquence de données en entrée,
    l'entrelacement de la séquence de données en entrée,
    le décalage de la séquence de données entrelacées de manière circulaire et la génération de la séquence de données en entrée décalées,
    la génération d'un symbole de multiplexage OFDM en appliquant une transformation rapide de Fourier inverse, IFFT, par rapport à la séquence de données en entrée décalées,
    l'échange d'une composante I et d'une composante Q du symbole de multiplexage OFDM généré afin de générer un autre symbole de multiplexage OFDM présentant des composantes I et Q échangées.

**8.** Support d'enregistrement selon la revendication 7, dans lequel l'échange des composantes I et Q par rapport au symbole de multiplexage OFDM avec $d_{frame}$ [k], k = 0, 1, 2,..., est effectué par les équations suivantes :

$$C_{D,2n}[l] = d_{frame}\left[\frac{N_D}{2} \times (2n - N_{sync} - N_{hdr}) + l\right]$$

$$C_{D,2n+1}[l] = P_{spread}[n] \times \left\{\begin{array}{l} imag\ (d_{frame}\left[\frac{N_D}{2} \times (2n - N_{sync} - N_{hdr}) + (N_D - 1 - l)\right]) \\ + jreal\ (d_{frame}\left[\frac{N_D}{2} \times (2n - N_{sync} - N_{hdr}) + (N_D - 1 - l)\right]) \end{array}\right\}$$

où $N_D$ indique une valeur constante permettant de regrouper les symboles de multiplexage OFDM égaux au nombre de sous porteuses de données, $N_{sync}$ représente le nombre de symboles d'un préambule de type PLCP, $d_{frame}[k]$ est un symbole de multiplexage OFDM appliqué en entrée d'une partie d'échange et $N_{hdr}$ représente le nombre de symboles d'un en-tête de type PLCP.

9. Support d'enregistrement selon la revendication 8, dans lequel la valeur Pspread est calculée par l'équation suivante :

$$Pspread[n] = p\left[ \mathrm{mod}(n - \frac{N_{sync}}{2} + 6, N_{FFT} - 1) \right]$$

où p [ ] indique une séquence pseudo aléatoire de longueur prédéterminée.

[Fig. 1]

FREQUENCY

f3

f2          104          110

f1      102      108

100      106

TIME

[Fig. 2]

230

| 200 | 202 | 204 | 206 | 207 | 208 | 210 | 216 | 220 |
|-----|-----|-----|-----|-----|-----|-----|-----|-----|
| MAC I/F | FEC ENCODER | INTERLEAVING /BIT MAPPING PART | SYMBOL MODULATING PART | PILOT INSERTING PART | IFFT | PREFIX & GUARD INTERNAL INSERTING PART | DAC | TRANSMITTING PART |

222

I

Q

DAC

218

[Fig. 3]

250

| 270 | 268 | 266 | 264 | 262 | 260 | 258 | 254 | 252 |
|-----|-----|-----|-----|-----|-----|-----|-----|-----|
| MAC I/F | FEC DECODER | DEINTERLEAVER & COMBINER | CHANNEL ESTIMATOR & EQUALIZER | FFT | DECIMATOR | PREFIX & GUARD INTERNAL INSERTING PART | DAC | RECEIVING PART |

I

Q

DAC

256

[Fig. 4]

START

300  RECEIVE INPUT DATA SEQUENCE

302  MAP INPUT DATA SEQUENCE INTO TRANSMISSION DATA SEQUENCE

304  GENERATE OFDM SYMBOL WITH TRANSMISSION DATA SEQUENCE

END

[Fig. 5]

402

Hop bands

| f1 | f2 | f3 | f1 | f2 | f3 | f1 | f2 | f3 |
|----|----|----|----|----|----|----|----|----|
| $b_0$ | $b_0$ | $b_0$ | $b_0$ | $b_1$ | $b_1$ | $b_1$ | $b_1$ | $b_2$ |
| . | . | . | . | . | . | . | . | . |
| $b_4$ | $b_4$ | $b_4$ | $b_4$ | $b_4$ | $b_4$ | $b_4$ | $b_4$ | $b_5$ |
| . | . | . | . | . | . | . | . | . |
| $b_6$ | $b_6$ | $b_6$ | $b_6$ | $b_7$ | $b_7$ | $b_7$ | $b_7$ | $b_8$ |
| . | . | . | . | . | . | . | . | . |
| $b_{54}$ | $b_{54}$ | $b_{54}$ | $b_{54}$ | $b_{55}$ | $b_{55}$ | $b_{55}$ | $b_{55}$ | $b_{56}$ |
| . | . | . | . | . | . | . | . | . |
| $b_{57}$ | $b_{57}$ | $b_{57}$ | $b_{57}$ | $b_{58}$ | $b_{58}$ | $b_{58}$ | $b_{58}$ | $b_{59}$ |
| . | . | . | . | . | . | . | . | . |
| $b_{597}$ | $b_{597}$ | $b_{597}$ | $b_{597}$ | $b_{598}$ | $b_{598}$ | $b_{598}$ | $b_{598}$ | $b_{599}$ |

subcarriers

| $b_0$ | $b_1$ | $b_2$ |
|----|----|----|
| $b_3$ | $b_4$ | $b_5$ |
| $b_6$ | $b_7$ | $b_8$ |
| . | . | . |
| $b_{54}$ | $b_{55}$ | $b_{56}$ |
| $b_{57}$ | $b_{58}$ | $b_{59}$ |
| . | . | . |
| . | . | . |
| $b_{597}$ | $b_{598}$ | $b_{599}$ |

$b_0, b_1, b_2, b_3, b_4 \cdots$ →

404

Hop bands

| f1 | f2 | f3 | f1 | f2 | f3 |
|----|----|----|----|----|----|
| $b_0$ | $b_0$ | $b_1$ | $b_1$ | $b_2$ | $b_2$ |
| . | . | . | . | . | . |
| $b_4$ | $b_4$ | $b_4$ | $b_4$ | $b_5$ | $b_5$ |
| . | . | . | . | . | . |
| $b_6$ | $b_6$ | $b_7$ | $b_7$ | $b_8$ | $b_8$ |
| . | . | . | . | . | . |
| $b_{54}$ | $b_{54}$ | $b_{55}$ | $b_{55}$ | $b_{56}$ | $b_{56}$ |
| . | . | . | . | . | . |
| $b_{57}$ | $b_{57}$ | $b_{58}$ | $b_{58}$ | $b_{59}$ | $b_{59}$ |
| . | . | . | . | . | . |
| $b_{597}$ | $b_{597}$ | $b_{598}$ | $b_{598}$ | $b_{599}$ | $b_{599}$ |

subcarriers

[Fig. 6]

450

| INPUT SEQUENCE → | 452 $N_n \times N_{CBPS}$ BLOCK INTERLEAVER | → | 454 TONE INTERLEAVER | → | 456 BIT MAPPING PART | → | 458 CONJUGATE COMPLEX NUMBER REPEATER |
|---|---|---|---|---|---|---|---|

[Fig. 7]

510

## Hop bands

| f1 | f2 | f3 | f1 | f2 | f3 | f1 | f2 | f3 | f1 | f2 | f3 |
|----|----|----|----|----|----|----|----|----|----|----|----|
| $b_0$ | $b_{597}$ | $b_0$ | $b_{597}$ | $b_1$ | $b_{598}$ | $b_1$ | $b_{598}$ | $b_2$ | $b_{599}$ | $b_2$ | $b_{599}$ |
| $b_3$ | $b_{594}$ | $b_3$ | $b_{594}$ | $b_4$ | $b_{595}$ | $b_4$ | $b_{595}$ | $b_5$ | $b_{596}$ | $b_5$ | $b_{596}$ |
| $b_6$ | $b_{591}$ | $b_6$ | $b_{591}$ | $b_7$ | $b_{592}$ | $b_7$ | $b_{592}$ | $b_8$ | $b_{593}$ | $b_8$ | $b_{593}$ |
| $b_{54}$ | $b_{543}$ | $b_{54}$ | $b_{543}$ | $b_{55}$ | $b_{544}$ | $b_{55}$ | $b_{544}$ | $b_{56}$ | $b_{545}$ | $b_{56}$ | $b_{545}$ |
| $b_{57}$ | $b_{540}$ | $b_{57}$ | $b_{540}$ | $b_{58}$ | $b_{541}$ | $b_{58}$ | $b_{541}$ | $b_{59}$ | $b_{542}$ | $b_{59}$ | $b_{542}$ |
| $b_{597}$ | $b_0$ | $b_{597}$ | $b_0$ | $b_{598}$ | $b_1$ | $b_{598}$ | $b_1$ | $b_{599}$ | $b_2$ | $b_{599}$ | $b_2$ |

subcarriers

500 502 504 506

[Fig. 8]

## Hop bands

| f1 | f2 | f3 | f1 | f2 | f3 | f1 | f2 | f3 | f1 | f2 | f3 |
|----|----|----|----|----|----|----|----|----|----|----|----|
| $b_0$ | $b_{597}$ | $b_{597}$ | $b_{537}$ | $b_1$ | $b_{598}$ | $b_{598}$ | $b_{598}$ | $b_2$ | $b_{599}$ | $b_{599}$ | $b_{539}$ |
| $b_{30}$ | $b_0$ | $b_{597}$ | · | $b_{31}$ | $b_1$ | $b_{598}$ | · | $b_{32}$ | $b_2$ | $b_{599}$ | · |
| · | · | $b_0$ | · | · | · | $b_1$ | · | · | · | $b_2$ | · |
| $b_3$ | · | · | $b_0$ | $b_4$ | · | · | $b_1$ | $b_5$ | · | · | $b_2$ |
| · | $b_3$ | · | · | · | $b_4$ | · | · | · | $b_5$ | · | · |
| · | · | $b_3$ | · | · | · | $b_4$ | · | · | · | $b_5$ | · |
| $b_6$ | · | · | $b_3$ | $b_7$ | · | · | $b_4$ | $b_8$ | · | · | $b_5$ |
| · | $b_6$ | · | · | · | $b_7$ | · | · | · | $b_8$ | · | · |
| · | · | $b_6$ | · | · | · | $b_7$ | · | · | · | $b_8$ | · |
| $b_9$ | · | · | $b_6$ | $b_{10}$ | · | · | $b_7$ | $b_{11}$ | · | · | $b_8$ |
| · | $b_9$ | · | · | · | $b_{10}$ | · | · | · | $b_{11}$ | · | · |
| · | · | $b_6$ | · | · | · | $b_{10}$ | · | · | · | $b_{11}$ | · |
| $b_{12}$ | · | · | $b_6$ | $b_{13}$ | · | · | $b_{10}$ | $b_{14}$ | · | · | $b_{11}$ |
| · | $b_{12}$ | · | · | · | $b_{53}$ | · | · | · | $b_{14}$ | · | · |
| · | · | $b_6$ | · | · | · | $b_{53}$ | · | · | · | $b_{14}$ | · |
| · | · | $b_6$ | · | · | · | $b_{53}$ | · | · | · | $b_{14}$ | · |
| $b_{51}$ | · | · | · | $b_{52}$ | · | · | $b_{53}$ | · | · | · | · |
| · | $b_{51}$ | · | · | · | $b_{52}$ | · | · | · | $b_{53}$ | · | · |
| · | · | $b_6$ | · | · | · | $b_{52}$ | · | · | · | $b_{53}$ | · |
| $b_{54}$ | · | · | $b_6$ | $b_{55}$ | · | · | $b_{52}$ | $b_{56}$ | · | · | $b_{53}$ |
| · | $b_{54}$ | · | · | · | $b_{55}$ | · | · | · | $b_{56}$ | · | · |
| · | · | $b_{54}$ | · | · | · | $b_{55}$ | · | · | · | $b_{56}$ | · |
| $b_{57}$ | · | · | $b_{54}$ | $b_{58}$ | · | · | $b_{55}$ | $b_{59}$ | · | · | $b_{56}$ |
| $b_{567}$ | $b_{537}$ | · | · | $b_{568}$ | $b_{538}$ | · | · | $b_{599}$ | $b_{539}$ | · | · |
| $b_{597}$ | $b_{557}$ | $b_{537}$ | $b_{507}$ | $b_{598}$ | $b_{568}$ | $b_{538}$ | $b_{508}$ | $b_{599}$ | $b_{599}$ | $b_{539}$ | $b_{509}$ |

subcarriers

600 602 604 606

18

[Fig. 9]

Hop bands

700 702 704 706

[Fig. 10]

[Fig. 11]

**REFERENCES CITED IN THE DESCRIPTION**

**Patent documents cited in the description**

- US 2004081073 A1
- US 2004178934 A1